# EUROPEAN PATENT APPLICATION

(11) **EP 4 270 691 A2**
(43) Date of publication of application: **01.11.2023**
(21) Application number: 23167131.4
(22) Date of filing: 06.04.2023
(51) Int. Cl.: H02B 1/03, H01R 13/639

(54) **CONNECTION MODULE FOR CONNECTING A POWER CABLE FROM AN ENERGY COMPANY AND PLUG FOR COOPERATION WITH THE CONNECTION MODULE**

(30) Priority: 07.04.2022 NL 2031524
(71) Applicant: Connectens B.V., 7482 CA Haaksbergen (NL)
(72) Inventor: TEN CATE, Eric, 7876 AB Valthermond (NL); HOEFMAN, Roy, 7544 SP Enschede (NL); TIJINK, Sander, 7478 DJ Diepenheim (NL); TELMAN, Henk, 7545 AZ Enschede (NL)
(74) Representative: Mink-Lindenburg, Charlotte Hildegard

(57) **Abstract**

The invention relates to an electrotechnical connection module for connecting a one-phase or three-phase power cable of an energy company, in which the connection module is arranged for accommodation of one or more main fuses for each phase, the connection module comprises a first housing with a detachable cover or lid and sealing means for sealing the cover to the first housing.

## Description

The invention relates to an electrotechnical connection module for connecting a one-phase or three-phase power cable of an energy company, wherein the connection module is arranged for accommodation of one or more main fuses for each phase, the connection module comprises a first housing with a detachable cover or lid and comprises sealing means for sealing the cover to the first housing.

Such a connection module is known in the art and is used for connecting a power cable to for instance a fuse box.

A different connection module according to the preamble of claim 1 is described in the European patent EP1432080. This known connection module is not suitable for connecting a one-phase or three-phase power cable of an energy company but offers a watertight housing in which two electrical connectors can be connected.

The invention aims to provide an alternative connection module that can be installed faster on site. To that effect, the connection module according to the present invention is characterized in that the connection module comprises a first connector for cooperation with a first plug which is attached to the power cable, wherein the first connector comprises first connections for the conduction of one or more phase wires and a neutral wire of the power cable to one or more safety devices, such as a fuse or residual-current device;
wherein the connection module comprises locking means for locking the first plug in the first connector; and wherein the sealing means are arranged for sealing the locking means.

By the abovementioned measures, the connection module according to the invention can easily be installed by coupling the plug, which is arranged on the power cable, to the connector of the connection module. For completion of a building, public charging station, public outdoor lighting, or any other object, which is to be connected to the power grid by the energy company, an installer from the energy company will lay the power cable (often underground) to the object. Using the inventive connection module, this installer will block the power cable with a plug that can collaborate with the inventive connection module.

At another time, a (different) installer of the energy company can install the inventive connection module easily by plugging the respective plug into the connector of the inventive connection module. This has therefore the advantage that the connection module according to the invention can be connected faster.

These measures also make it possible to provide the inventive connection module with the necessary protections in advance, such as a circuit breaker for each phase, and connect those protections to the connector. This allows a stock of prepared connection modules to be made, that can be checked in advance.

Connecting the prepared inventive connection module also places fewer demands on the installer, allowing lower skilled personnel to perform the installation of the connection module.

After sealing, the first plug cannot be removed from the connection module without breaking the seal.

The connection module according to the invention is also characterized in that the locking means comprise a locking element, which is arranged for cooperation with the first housing for enclosing of a first plug, which is placed in the first connector.

Thereby the locking element preferably comprises a bracket, wherein the bracket is movably arranged in the first housing of the connection module between an unlocked state, wherein a first plug is placeable in the first connector and a locked state, wherein the bracket prohibits the removal of the first plug from the first connector.

By using the locking element, the first plug can be durably attached to the housing. By applying the bracket, the locking element is attached to the housing at all times, so that the locking element is visible for the user of the connection module.

In a preferred embodiment of the inventive connection module the locking means comprise an operating element, such as a button, which is arranged on the cover, which operating element comprises a key, the locking means also comprise a keyhole collaborating with the key which is arranged in the locking element, wherein the key is only lockable in the keyhole if the locking element is positioned to enclose a first plug.

This has the advantage that the cover or the hood of the connection module can only be locked if the first plug is locked to the housing, so that an installer of the energy company cannot accidentally forget locking the first plug to the connection module.

The inventive connection module preferably comprises at least one or more cabinet modules, including a group cabinet module or a meter cabinet module;
wherein the cabinet module comprises a lockable second housing;
wherein the second housing is arranged for placement against a second housing of a further cabinet module and against the first housing of the connection module;
wherein the first housing and the second housing comprise one or more second connectors for connection of internal wiring of the cabinet module and/or connection module, which connector is placed close to a side of the first and/or second housing; and the connection module comprises one or more second plugs for electrical connection of adjacent second connectors.

By these measures, the further installation of an electricity meter or a group cabinet to the inventive connection module is simplified. The meter cabinet module or group cabinet can (largely) be arranged and checked in advance and can be installed by these measured quickly on site.

Preferably, the second plug is bridge shaped. By making the second plug bridge-shaped, the second plug can bridge adjacent cabinet modules or adjacent connection module and cabinet module.

To further simplify the installation of the connection module, the connection module according to the invention comprises a substantially flat ground panel, which is arranged for attaching to a surface, such as a wall, wherein the ground panel can be releasable coupled to a back side of the first or the second housing. The ground panel can for instance be arranged in a meter cabinet at the same time as the plug is arrange. At another time, the (prepared) connection module can be clicked into the ground panel in one go.

The invention also concerns a plug for cooperation with the connector of the connection module from the connection module according to the invention, wherein the plug is arranged for attaching to the end of the power cable, wherein the plug comprises a housing, that comprises first connections on the inside thereof for one or more phase wires and a neutral wire of the power cable and wherein the housing of the plug has an accommodation space for partial accommodation of the locking element of the connection module.

In a further embodiment of the plug accordion to the invention, the plug is arranged for connection of a further one- or three-phase cable, wherein the plug comprises a connection part, that comprises second connections for each of the phase wires of the further cable, the neutral wire and possibly a grounding wire, wherein the connection part comprises an electrically isolated contact surface, wherein the first and second connections are arranged for cooperation, wherein the connection part is placeable in the housing, such that each of the first and second connections are electrically connected to each other, and the end of the second cable is attachable to the housing.

This allows the power cable of the energy company to be looped through in an inventive manner. This is particularly important in public lighting, whereby the cable is repeatedly looped through to a successive lighting point.

In a preferred embodiment of the plug according to the invention, the plug comprises isolated pins that are each electrical conductively connected to one of the first connections. As a result, the phase wires of the power cable are shielded if the plug is not connected to the connector.

In a further elaboration of the preferred embodiment of the plug according to the invention the plug also comprises a connection for a grounding wire of the power cable; and the plug has a connection point on the exterior side for connecting a grounding wire of the connection module. It is the energy company's choice if the power cable is provided with a grounding wire. The plug according to the invention is prepared for this and has an external connection point for further connecting the grounding wire of the power cable.

Preferably, recessed measurement points are arranged on the exterior side of the housing of the plug according to the invention, which are each connected electrically conductive to one of the first connections. The measurement points are positioned in a such a manner, that the access to the measurement points is prevented when the plug is locked by the locking means.

The invention will be explained in more detail with reference to the following figures, wherein:
Figures 1A, 1B and 1C show a front view of three different embodiments of the electrotechnical connection module according to the invention;
Figure 2A shows the connection module according to Figure 1, wherein the cover of the housing has been removed;
Figure 2B shows the connection module according to Figure 2A;
Figure 3A shows a front view of the plug arranged on the power cable;
Figure 3B shows a view of the plug according to Figure 3A;
Figure 3C shows a rear view of the plug according to Figure 3A;
Figure 4A and 4C show the plug according to Figure 1C;
Figure 4B shows the connection part applied in the plug according to Figure 4A;
Figure 5 shows a connection module according to Figure 2B;
Figure 6A shows a view of the bottom modules of Figure 5;
Figure 6B shows a side view of the bridge;
Figure 7A shows an assembly plate, which serves as attachment for the housing of the connection module according to the invention;
Figure 7B shows the housing of the connection module according to the invention;
Figure 8A, 8B and 8C show the means for locking and sealing the connection module according to Figure 1A, 1B and 1C.

Similar reference numbers in different figures refer to similar parts.

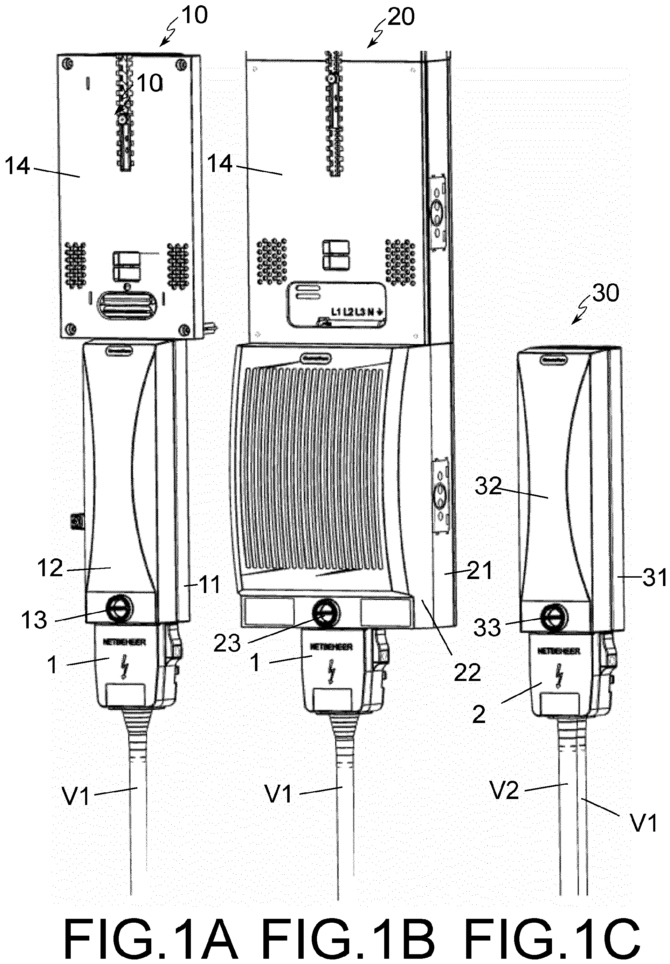

Figures 1A, 1B and 1C show a front view of three different embodiments 10, 20 and 30 of the electrotechnical connection module according to the invention.

Figure 1A concerns a connection module 10 which is arranged for a one-phase connection.

Figure 1B concerns a connection module 20 which is arranged for a three-phase connection.

Figure 1C concerns a connection module 30 which is arranged for placement in a tube, such as a lamppost, public charging station or any other unmanned object.

Each connection module 10, 20, 30 is embodied as a cabinet.

The connection modules 10, 20, 30 are all suitable for coupling to a power cable V1 of an energy company.

The connection modules 10, 20,30 comprise a connector, which is arranged in the housing 11, 21, 31 of the connection modules 10, 20, 30 for cooperation with a plug 1, 2, which is arranged on an end of the power cable V1.

The connection modules 10, 20, 30 comprise locking means for locking the plug 1, 2 in the connector. In further figures these locking means will be explained.

The housing 11, 21, 31 comprises a cover 12, 22, 32 that can be coupled to the housing 11, 21, 31. To that end the cover 12, 22, 32 comprises a button 13, 23, 33, that encloses the cover 12, 22, 32 in the housing 11, 21, 31. The button 13, 23, 33 thereby also engages the locking means.

The button 13, 23, 33 has a stationary rim relative to the cover 12, 22, 32. A passage is provided in both the button 13, 23, 33 and the rim, which are aligned when the button 13, 23, 33 encloses the housing 11, 21, 31. In this position a seal can be arranged through the passage to seal the connection modules 10, 20, 30.

The plug 2 is also suitable for a loop-through cable V2 to a further connection module.

The connection modules 10 and 20 comprise a meter cabinet module 14, 24 for placement of an electricity meter.

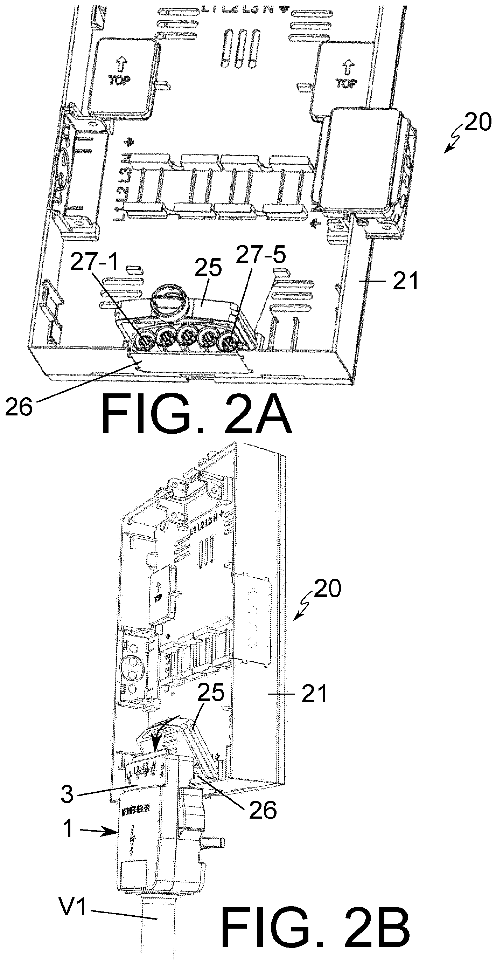

Figure 2A shows the connection module 20 according to Figure 1, wherein the cover 22 of the housing 21 is removed. In this figure the operation of the locking means 25 is explained. The connection modules 10 and 30 comprise similar locking means 25.

The connection module 20 comprises a connector 26, which is arranged for cooperation with the plug 1,2. The connector 26 is arranged for accommodation of the pins of the plug 1,2. To that end the connector 26 comprises tubular electrical slots 27-1, ..., 27-5 that are electrically isolated on the exterior side. In the housing 21 a bracket 25 is rotatable arranged around the connector 26 from a first position whereby the plug can be placed into the connector 26 to a second position whereby the plug is locked in the connector 26 by the bracket 25.

In Figure 2B the connection module 20 is shown according to Figure 2A, wherein the plug 1 is placed in the connector 26 and wherein the bracket 25 displaces from the first position to the second position. This is indicated by the arrow.

The plug 1 comprises a bracket accommodation space 3. When the bracket 25 is in the second position (such as in Figure 2A) the bracket 25 will lie over the bracket accommodation 3, causing the plug 1 to be locked in the connector 26. The plug 1 can be unlocked by rotating the bracket 25 to the first position, whereby the bracket abuts against a rear side of the housing 21.

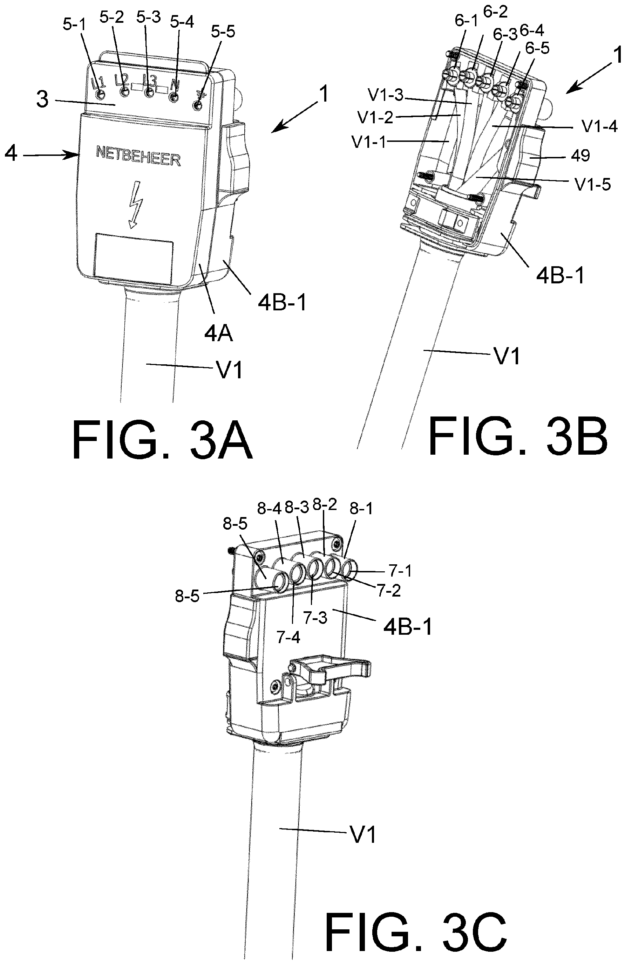

Figure 3A shows a front view of the plug 1 arranged on a power cable V1. The plug 1 comprises an electrically isolated plug housing 4 comprising a plug cover 4A and a connection part 4B-1, which can be coupled to each other. The plug cover 4A comprises measuring provisions to measure at the wires of the power cable V1. To the end, the plug cover 4A comprises measuring holes 5-1, ..., 5-5 that are partially electrically isolated on an interior side and provide access to first connection elements for connecting the wires of the plug 1. This allows a qualified person to use a measuring probe to measure at the wires of the plug 1, while it is placed in the connector 26.

The plug cover 4A further comprises the bracket accommodation space 3, wherein the measuring holes 5-1, ..., 5-5 are located. As a result, after the bracket 25 is placed over the bracket accommodation space 3, access to the measuring holes 5-1, ..., 5-5 is prevented.

Figure 3B shows a view of the plug according to Figure 3A, wherein the plug cover 4A is removed. The connection part 4B-1 of the plug 1 comprises first connection elements 6-1, ..., 6-5 for connecting the wires V1-1, ..., V1-5 of the power cable. The energy company does not have to provide grounding, so V1-5 is not always present or does not have to be connected.

In case the energy company does provide grounding, the cover 49 of the connection part 4B-1 can be removed, after which further grounding provisions can be coupled to the grounding wire V1-5.

If the cover 49 is not removed, the cover 49 will not be able to be removed after attaching the plug cover 4A on the connection part 4B-1. As a result, the wires V1-1, ..., V1-5 are protected for the end user.

Figure 3C shows a rear view of the plug 1 according to Figure 3A. The rear side of the connection part 4B-1 comprises pins 7-1, ..., 7-5 that are connected electrically conductive to the first connection elements 6-1, ... 6-5. The pins 7-1, ..., 7-5 are each recessed in an electrically isolated protection tube 8-1, ..., 8-5, so that it is not possible for a person to touch the pins 7-1, ..., 7-5.

The pins 7-1, ..., 7-5 are arranged for cooperation with the slots 27-1, ..., 27-5 of the connector 26.

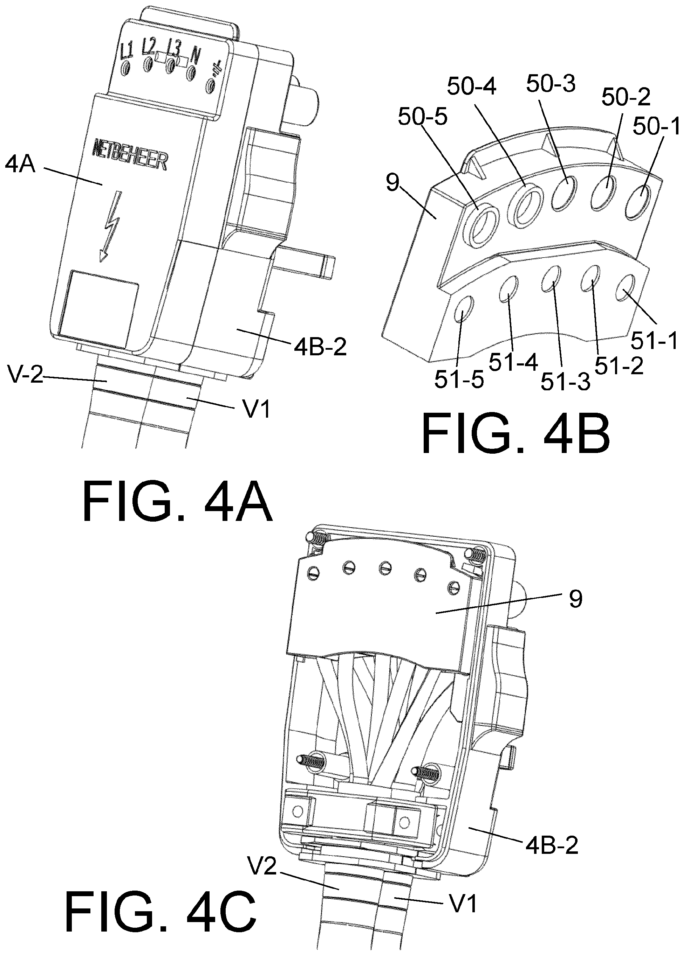

Figure 4A and 4C show the plug 2 according to Figure 1c. The plug 2 is largely similar to plug 1 but is arranged to loop through power cable V1 to a further cable V2. To that end, the plug 2 comprises a connection part 4B-2, which is arranged for accommodation of the first cable V1 and the second cable V2 and is further arranged with similar parts as connection part 4B-1. The plug 2 comprises an electrically isolated detachable coupling piece 9, that comprises connection elements 50-1, ..., 50-5. The wires of the second cable V2 are connectable to the second connection elements 50-1, ..., 50-5 through a side of the coupling piece and lockable through recessed screws 51-1, ..., 51-5.

The second connection elements 50-1, ..., 50-5 are arranged for coupling to the first connection elements 6-1, ... 6-5.

After placing the coupling piece in the connection part 4B-2, the second connection elements 50-1, ..., 50-5 make electrical contact with the first connection elements 6-1, ..., 6-5.

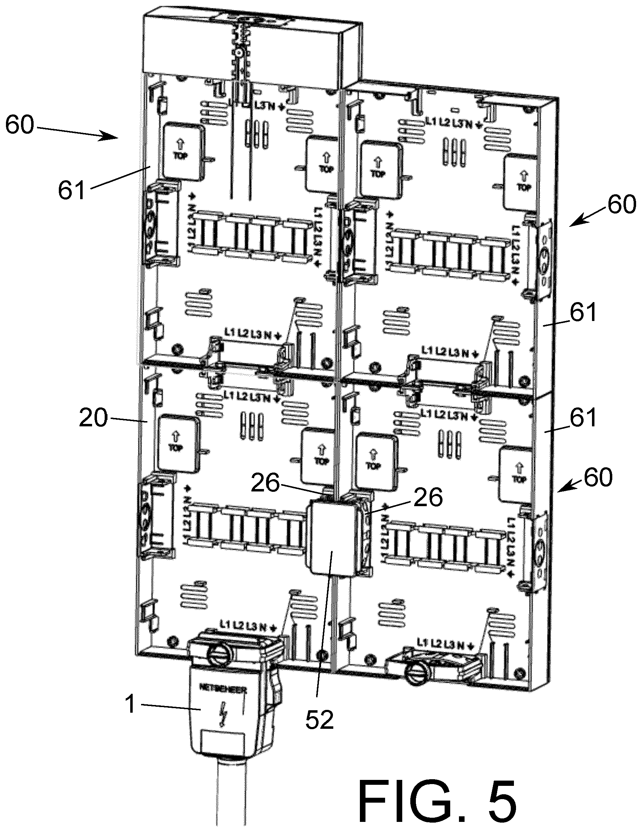

Figure 5 shows a connection module 20 according to Figure 2B, wherein the plug 1 is locked in the connection module 20. The connection module comprises further group cabinet modules 60, of which one can also serve as a meter cabinet module. Each group cabinet module comprises a housing 61, which is preferably similar to the housing 21 of the connection module 20. The modules are electrically couplable to each other by means of two connectors 26 and an electrical connection element, embodied as a bridge, for coupling the two connectors 26. The bottom modules, namely the connection module (left) and the right module, for instance a meter cabinet module or group cabinet module, are electrically connected by the bridge 52.

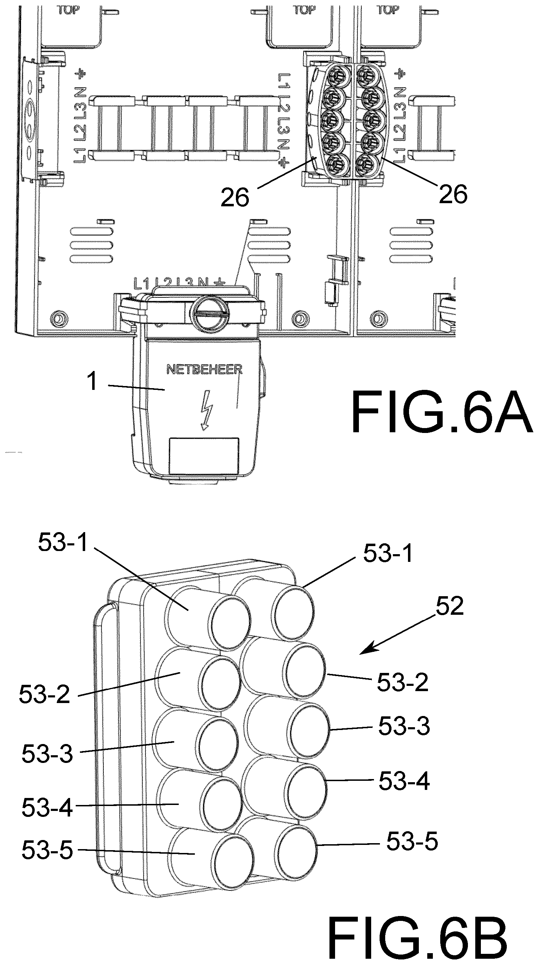

Figure 6A provides a view of the bottom modules of Figure 5. Herein only the bottom modules are electrically coupled to each other in such a manner. The left bottom module is a connection module, and the right bottom module is a group cabinet module or a meter cabinet module. The housing 21 of the left bottom module comprises a connector 26 on the right side. The housing 21 of the right bottom module comprises a connector 26 on the left side.

In Figure 6B a side view of the bridge 52 is shown. The connection module 20 comprises a bridge 52 which is connectable to both connectors 26 of Figure 6. To this end, the bridge 52 comprises a double pair of pins 53-1, ..., 53-5 which are identical to the pins 7-1, ..., 7-5 of plug 1. The pins are internally connected in pairs.

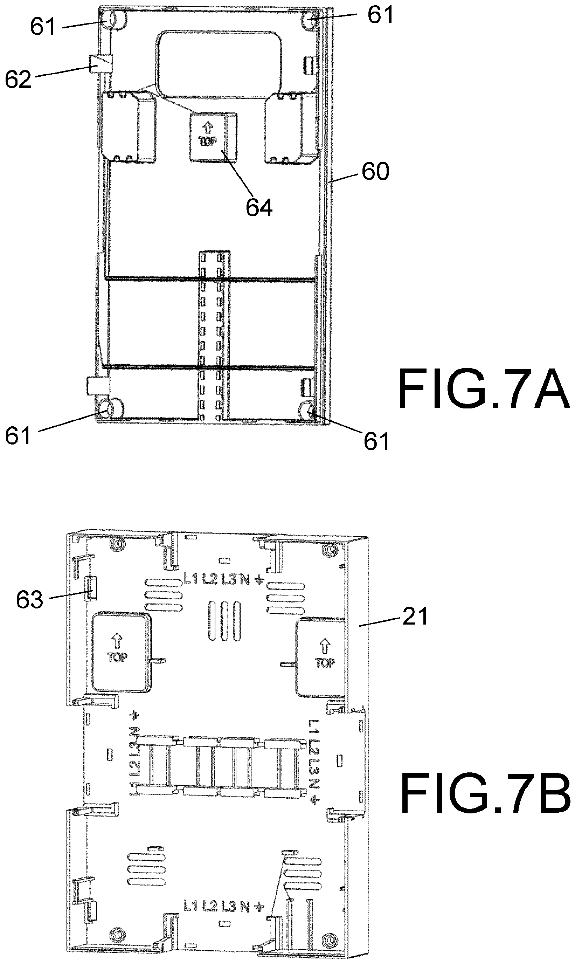

Figure 7A shows an assembly plate 60, that serves as an attaching for the housing 21 of the connection module 20 according to the invention.

Figure 7B shows the housing 21 of the connection module 20 according to the invention. The assembly plate 60 comprises screw holes 61 for attaching the plate to a wall. The housing 21 can easily be attached to the assembly plate 60 by a click connection 62, 63. After attaching the housing 21 to the assembly plate 60 there is a space between the housing 21 and the assembly plate 60 defined by the spacer block 64. This space can be used for routing of cabling. The assembly plate 60 is also arranged to function as a cover for the housing 21. This is shown in Figures 1A and 1C. An electricity meter can be fitted to this.

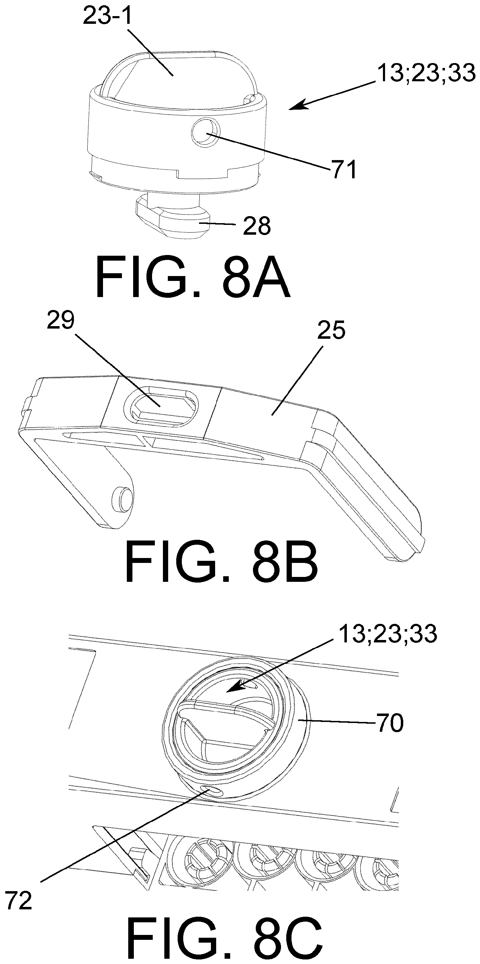

Figures 8A, 8B and 8C show means for locking and sealing the connection module 10;20;30 according to Figure 1A, 1B and 1C. Figure 8A shows a view of the button 13;23;33. The button 13;23;33 comprises an operating surface 23-1 for turning of the button 13;23;33. The housing 11, 21, 31 comprises a cover 12, 22, 32 that can be attached to the housing 11, 21, 31. To this end, the cover 12, 22, 32 comprises the button 13, 23, 33 that locks the cover 12, 22, 32 in the housing 11, 21, 31. A key 28 is arranged on the side facing away from the operating surface 23-1 of the button 13, 23, 33, which cooperates with a keyhole 29 arranged in the locking means.

The button 13, 23, 33 has a stationary rim 70 relative to the cover 12, 22, 32. A passage 71, 72 is arranged in both the button 13, 23, 33 and the rim, which are aligned when the button 13, 23, 33 encloses the housing 11, 21, 31, whereby the key 28 is turned in the keyhole 29. In this position a seal (such as a wire seal) can be arranged through the passage 71, 72 to seal the connection modules 10, 20, 30.

The connection modules 10;20;30 according to Figure 1A, 1B and 1C are only sealable if the bracket 25 is in the second position, wherein the bracket 25 is placed over the bracket accommodation space 3. After sealing the plug 1;2 also cannot be removed from the connector 26, preventing unauthorized access to the plug 1;2.
The assembly of the connection module and the plug according to the invention allow for drastic reduction of the installation time of the connection module.

## Claims

1. Electrotechnical connection module (10;20;30) for connection of a one-phase or three-phase power cable (V1) from an energy company, wherein the connection module (10;20;30) is arranged for accommodation of one or more main fuses for each phase,
the connection module (10;20;30) comprises a first housing (11;21;31) with a detachable cover (12;22;32) and sealing means for sealing the cover (12;22;32) to the first housing (11;21;31),
**characterized in that** the connection module (10;20;30) comprises a first connector (26) for cooperation with a first plug (1;2) which is attached to the power cable (V1),
wherein the first connector (26) comprises first connections (27-1;...;27-5) for the conduction of one or more phase wires and a neutral wire of the power cable (V1) to one or more safety devices, such as a fuse or residual-current device;
wherein the connection module (10;20;30) comprises locking means for locking the first plug (1;2) in the first connector (26); and
wherein the sealing means are arranged for sealing the locking means and wherein the locking means comprise a locking element, which is arranged for cooperation with the first housing (11;21;31) and can be positioned over a first plug (1;2) placed in a first connector (26) and after positioning encloses the first plug (1;2) between the locking element and the first housing (11;21;31).

2. Connection module (10;20;30) according to claim 1, wherein the locking element comprises a bracket (25), wherein the bracket (25) is movably arranged in the first housing (11;21;31) of the connection module (10;20;30) between an unlocked state, wherein the first plug (1;2) is placeable in the first connector (26) and a locked state, wherein the bracket (25) prevents the removal of the first plug (1;2) from the first connector (26).

3. Connection module (10;20;30) according to one of the claims 1-2, wherein the locking means comprise an operating element, such as a button(13;23;33), which is arranged on the cover (12;22;32), which operating element comprises a key (28), the locking means also comprise a keyhole (29) cooperating with the key (28) which is arranged in the locking element, wherein the key (28) is only lockable in the keyhole (29) when the locking element is positioned to enclose a first plug (1;2).

4. Connection module (10;20;30) according to one of the foregoing claims, wherein the connection module (10;20;30) comprises at least one or more cabinet modules (60), including a group cabinet module or a meter cabinet module (14,24);
wherein the cabinet module comprises a lockable second housing (61);
wherein the second housing (61) is arranged for placement against a second housing (61) of the further cabinet module (60) and against the first housing (11;21;31) of the connection module (10;20;30);
wherein the first housing (11;21;31) and the second housing (61) comprise one or more second connectors (26) for connecting internal wiring of the cabinet module (60) and/or connection module (10;20;30), which connector is located near a side of the first and/or second housing (61); and the connection module (10;20;30) comprises one or more second plugs (52) for electrically connecting adjacent second connectors (26).

5. Connection module (10;20;30) according to claim 4, wherein the second plug (52) is bridge shaped.

6. Connection module (10;20;30) according to one of the foregoing claims, wherein at least one module, such as for instance the connection module (10;20;30) or cabinet module (60), comprises a substantially flat ground panel (60), which is arranged for attaching to a surface, such as a wall and the ground panel (60) can be releasably coupled to a back side of the housing of the module.

7. Plug (1) for cooperation with the connector of the connection module (10;20;30) according to claim 1, wherein the plug (1) is arranged for attaching to the end of a power cable (V1), wherein the plug (1) comprises a housing (4), which on the inside thereof comprises first connections (6-1;...;6-5) for one or more phase wires and a neutral wire of the power cable (V1) and in which the housing (4) of the plug (1) has an accommodation space (3) for partial accommodation of the locking element of the connection module (10;20;30).

8. Plug (1;2) according to claim 7, wherein the plug (1;2) is arranged for connecting a further one or three-phase cable (V2),
wherein the plug (1;2) comprises a connection part (4B-2), which comprises second connections for each of the phase wires of the further cable, the neutral wire and optionally a ground wire, wherein the connection part (4B-2) comprises an electrically isolated contact surface,
in which the first and second connections are arranged for cooperation,
wherein the connection part (4B-2) is positionable within the housing (4), such that each of the first connections (6-1;...;6-5) and second connections (50-1;...;50-5) are electrically connected to each other, and the end of the second cable(V2) is attachable to the housing (4).

9. Plug (1;2) according to claim 7 or 8, wherein the plug (1;2) comprises isolated pins (7-1; ... ;7-5), each of which is electrically conductively connected to one of the first connections (6-1;...;6-5).

10. Plug (1;2) according to one of the claims 8-9, wherein the plug (1;2) also comprises a connection for a ground wire (V1-5) of the power cable (V1); and the plug (1;2) has a connection point on the exterior side for the connecting a ground wire from the connection module (10;20;30).

11. Plug (1;2) according to one of the claims 7-10, wherein recessed measurement points (5-1;... ;5-5) are arranged on the exterior side of the housing (4), which are each electrically conductively connected to one of the first connections (6-1;...;6-5).
